# EUROPÄISCHE PATENTSCHRIFT

(11) **EP 2 635 838 B1**
(45) Veröffentlichungstag und Bekanntmachung des Hinweises auf die Patenterteilung: **01.10.2014**
(21) Anmeldenummer: 10782539.0
(22) Anmeldetag: 03.11.2010
(51) Int. Cl.: F16L 55/13

(54) **ELEMENT, VORZUGSWEISE EIN VERSCHLUSSELEMENT**
ELEMENT, IN PARTICULAR SEALING ELEMENT
ÉLÉMENT, EN PARTICULIER ÉLÉMENT D'OBTURATION

(43) Veröffentlichungstag der Anmeldung: 11.09.2013
(73) Patentinhaber: KVT-Koenig AG, 8953 Dietikon (CH)
(72) Erfinder: WÜST, Beat, CH-8048 Zürich (CH); KRAUER, Jürg, CH-8610 Uster (CH)
(74) Vertreter: Luchs, Willi
(86) Internationale Anmeldenummer: PCT/EP2010/006692
(87) Internationale Veröffentlichungsnummer: WO 2012/059116

(56) Entgegenhaltungen:
- EP-A1- 2 023 031
- WO-A1-2009/000317
- US-A- 1 914 409
- US-A- 3 560 030
- US-A- 5 078 294
- US-A- 5 944 057

## Beschreibung

Die Erfindung betrifft ein Element, vorzugsweise ein Verschlusselement zum dichten Verschliessen innendruckbeanspruchter Bohrungen von Motor- und Ventilblöcken, Chemiebehältern und ähnlichen Bauteilen, mit einem in die Bohrung weitgehend spielfrei einsetzbaren hohlzylindrischen Grundkörper und einem in den Grundkörper eindrückbaren Spreizkörper, der im eingebauten Zustand radialen Druck auf die Innenwand des Grundkörpers ausübt.

Insbesondere Verschlusselemente dieser Art werden als sogenannte Expander in Bohrungen mit unterschiedlichen Durchmessern und Innendrücken eingesetzt. Je nach Grösse der Bohrung und Stärke des wirksamen Innendrucks ergeben sich verschiedenartige Ausführungen. Ein Verschlusselement der eingangs genannten Art ist in der WO 2009/000317 A1 geoffenbart. Der dort beschriebene Verschluss zeichnet sich aus durch eine einfache Fertigung und eine ebenso einfache Bedienung, hat aber gleichzeitig den Nachteil, dass er nur bei kleinen bis moderaten Innendrücken einsetzbar ist. Bei höheren Innendrücken ist die feste Verankerung des Verschlusses an der Wand der zu verschliessenden Bohrung nicht immer gewährleistet.

Gemäss der Druckschrift EP-A-2 023 031 ist ein Verfahren zum druckdichten Verschliessen einer Bohrung in einem Gehäuse geoffenbart, bei dem ein im wesentlichen büchsenförmiger Stopfen in eine Bohrung eines Gehäuses eingesetzt und durch ein in axialer Richtung der Bohrung eingeführtes Werkzeug derart plastisch verformt wird, dass dieser Stopfen auf seiner Aussenseite über einen Teil seiner Länge radial nach aussen in eine umlaufende Nut bzw. eine Hinterschneidung in der Bohrung hineingedrückt wird. Zu diesem Zwecke ist der Stopfen bodenseitig in Richtung des Werkzeuges bombiert oder in Form eines Kegels ausgebildet. Dadurch kann der Stopfenboden durch eine radial nach aussen erfolgende Verformung in diese Nut gedrückt werden. Nachteilig bei diesem Verschluss ist zum einen, dass eine solche Nut in der Bohrung eingearbeitet werden muss, was aufwändig ist und zum andern die Gefahr besteht, dass im Betriebszustand bei einem auf die Unterseite des Stopfenbodens wirkenden Druck von der Innenseite des Gehäuses dieser Boden in Richtung der Bohrung nach aussen gedrückt wird und sich dann der Stopfen wieder aus dieser Nut herauslöst.

In der Druckschrift US-A-5,944,057 ist ein Verschluss sowie ein Verschliessverfahren beschrieben, bei dem ein Heizungsrohr abgedichtet werden soll. Zu diesem Zwecke wird ein Dichtungselement des Verschlusses in eine Bohrung eingedrückt. Es kann dann ebenfalls von Hand ein Halteelement und ein Deckel in das Dichtungselement eingedrückt werden, weil bei einem Heizungsrohr aber keine oder nur geringfügige Überdrücke bestehen.

Der Erfindung liegt die Aufgabe zugrunde, diesen Nachteil zu vermeiden und ein Element der eingangs genannten Art zu schaffen, das sich dadurch auszeichnet, dass es auch bei einfacher Fertigung und Bedienung wesentlich höhere Innendrücke aushalten kann.

Diese Aufgabe wird erfindungsgemäss dadurch gelöst, dass der Grundkörper mit einem Verschlussboden versehen ist, wobei die Einbautiefen des Grundkörpers und des Spreizkörpers so aufeinander abgestimmt sind, dass im eingebauten Zustand durch eine auf den Verschlussboden wirkende axiale Kraft in Zusammenwirkung mit dem Spreizkörper die Seitenwand des Grundkörpers annähernd radial gegen die Wand der zu verschliessenden Bohrung angedrückt wird.

Das auf diese Weise erfolgte Biegemoment bzw. Verformung des Verschlussbodens bewirkt eine zusätzliche seitliche Anpresskraft bzw. Aufweitung des Grundkörpers, die ihrerseits eine verstärkte Verankerung des Expanders in der Wand des die Bohrung aufweisenden Bauteils zur Folge hat. Dadurch kann das Verschlusselement wesentlich höheren Innendrücken standhalten, ohne dass es sich aus der Bohrung herauslöst.

Erfindungsgemäß wird der Verschlussboden durch die axiale Kraft bei der Innen- oder Aussenkante des Grundkörpers bei der innenseitigen Stirnfläche des Spreizkörpers gebogen. Daraus ergibt sich eine räumlich definierte Aufspreizung des Grundkörpers, die eine besonders starke Verankerung desselben in der Wand des Bauteiles verursacht.

Es ist im Sinne der angestrebten Verformung des Grundkörpers zweckmässig, wenn seine Wandstärke kleiner als die des Spreizkörpers bemessen ist. Es können aber auch die Materialien des Grundkörpers und des Spreizkörpers so gewählt werden, dass diese Verformung des Grundkörpers entsprechend erfolgt.

Im Hinblick auf die Massenanfertigung des erfindungsgemässen Verschlusses ist es vorteilhaft, wenn der Grundkörper und der Spreizkörper als Blechteile hergestellt sind.

Die Erfindung sieht ferner vor, dass der Grundkörper mit einem aussen abstehenden Stützflansch versehen ist, durch welchen die Einbautiefe des Grundkörpers im Zusammenwirken mit einer Anschlagfläche des Bauteils festlegbar ist.

Die Erfindung sieht ausserdem vor, dass der Grundkörper eingangsseitig mit einem zylindrischen Innenabsatz zur leichten Einführung des Spreizkörpers in den Grundkörper versehen ist.

Um die Verankerung des Grundkörpers an der Wand des Bauteiles zu verstärken, können der Aussenfläche des Grundkörpers vorzugsweise Umfangsrillen zugeordnet sein.

Die Erfindung sieht ebenfalls vor, dass die Aussenfläche des Spreizkörpers eine geringfügige Konizität mit von innen nach aussen abnehmendem Durchmesser aufweist.

Die Erfindung wird nachfolgend anhand eines Ausführungsbeispiels unter Bezugnahme auf die Zeichnung näher erläutert. Es zeigen:
- Fig. 1: einen erfindungsgemässen Verschluss im Schnitt dargestellt,
- Fig. 2: ein Detail des Grundkörpers gemäss der Einzelheit II/III in Fig.1,
- Fig. 3: ein Detail des Spreizkörpers, ebenfalls gemäss der Einzelheit II/III in Fig. 1,
- Fig. 4: ein Schnitt des verschlusses gemäss Fig. 1 im eingebauten Zustand dargestellt,
- Fig. 5: den Verschluss aus der Fig. 1 mit Innendruckbeaufschlagung veranschaulicht,
- Fig. 6: die Einzelheit VI aus Fig. 5, und
- Fig. 7: den Verschluss nach Fig. 1 im Schnitt, mit durch den Innendruck verformtem Verschlussboden.

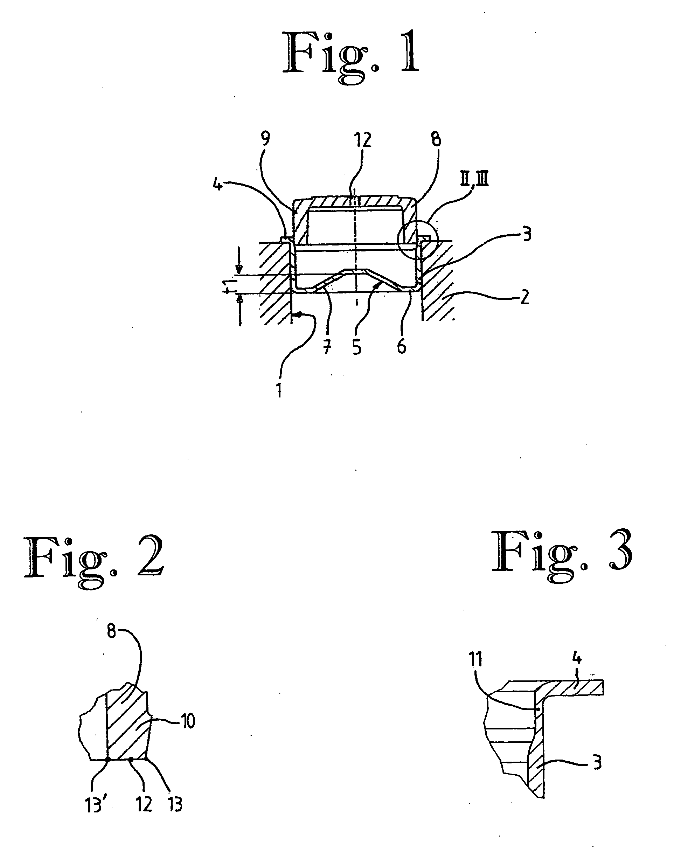

Der Verschluss gemäss Fig. 1 bis Fig. 7 dient zum dichten Verschliessen einer Bohrung 1 eines Bauteils 2, beispielsweise eines als Gussteil hergestellten Motorblocks. Die Bohrung hat üblicherweise einen Durchmesser zwischen 15 und 60 mm und ist einem Norm-Betriebsdruck zwischen 5 und 100 bar ausgesetzt. Somit kann der Verschluss auch in Bohrungen mit unterschiedlichen Durchmessern und Betriebsdrücken eingesetzt werden.

Das Verschlusselement weist einen in die Bohrung 1 weitgehend spielfrei einsetzbaren hohlzylindrischen Grundkörper 3 auf, der mit einem nach aussen abstehenden Stützflansch 4 und einem nach innen gewölbten Verschlussboden 5 versehen ist. Letzterer weist eine umfängliche radiale Ringfläche 6 auf, an welcher eine leicht konische Kegelfläche 7 sich anschliesst. Anstelle eines Stützflansches 4 beim Grundkörper 3 könnte beispielsweise auch ein abgestufter Aussendurchmesser oder eine untere Anschlagfläche bei der Bohrung 1 vorgesehen sein.

Das Verschlusselement weist ferner einen in den Grundkörper 3 eindrückbaren hutartigen Spreizkörper 8 auf, dessen Aussenfläche 9 zylindrisch ausgebildet ist, aber auch mit einer geringfügigen Konizität versehen sein könnte, vorteilhaft unten bei der Öffnung mit einem grösserem Durchmesser.

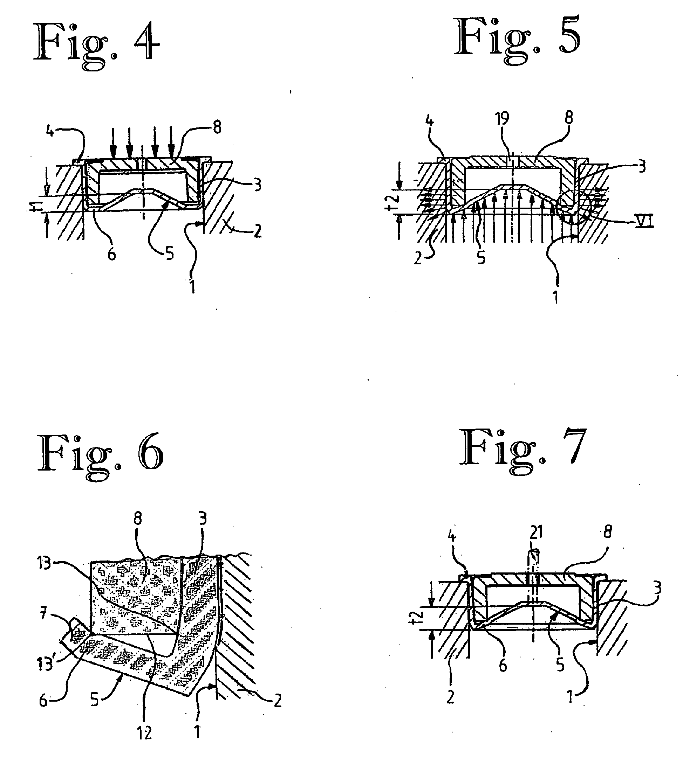

Vorteilhaft wird der Spreizkörper 8 bereits in einer Vormontage in den Grundkörper 3 leicht eingeschoben, so dass die beiden Teile zusammen montiert werden. Wie aus Fig. 1 ersichtlich, wird der Grundkörper 3 weitgehend spielfrei in die Bohrung 1 eingesetzt, bis der Stützflansch 4 mit dem Bauteil 2 in Anschlag ist. Hieraus resultiert die Einbautiefe des Grundkörpers. Danach wird der Spreizkörper 8 in den Grundkörper 3 eingeführt, wobei letzterer eingangsseitig mit einem die Einführung des Spreizkörpers erleichternden zylinderischen Innenabsatz 11 versehen ist. Der Spreizkörper 8 wird anschliessend mit Hilfe einer Presse, einem Hammer oder einer Druckpistole so tief in den Grundkörper 3 eingedrückt, bis , wie in Fig. 4 ersichtlich, seine untere Stirnfläche 12 auf der Ringfläche 6 des Verschlussbodens 5 aufliegt oder nur geringfügig von ihm abgesetzt ist. In dieser Einbaulage ist die obere Stirnfläche des Spreizkörpers 8 bündig mit dem Stützflansch 4 des Grundkörpers. Zur Festlegung der Einbautiefe des Spreizkörpers kann dieser ebenfalls mit einem Stützflansch versehen sein. Ferner kann im Spreizkörper 8, wie in Fig. 2 dargestellt ist, ein Aussenansatz 10 vorgesehen sein.

Beim Eindrücken des Spreizkörpers 8 in den Grundkörper wird dieser vom Spreizkörper aufgeweitet und radial gegen die Wand der zu verschliessenden Bohrung angepresst. Dadurch wird der Grundkörper 3 in der Wand des Bauteiles fest verankert und ist daher in der Lage, dem im Betrieb herrschenden Innendruck standzuhalten, ohne dass dieser ihn aus der Bohrung herauslöst. Dazu trägt auch der eingangsseitige Aussenansatz 10 des Spreizkörpers 8 bei, mit dem die Aufweitung des Grundkörpers 3 bewirkt wird. Um die Verankerung des Grundkörpers zu verstärken, kann dessen Aussen und/oder Innenfläche mit vorzugsweise Umfangsrillen versehen sein.

Im Spreizkörper 8 ist auch eine Entlüftungsbohrung 19 vorgesehen, die verhindert, dass sich im Zwischenraum zwischen dem Spreizkörper und dem Verschlussboden 5 des Grundkörpers ein Überdruck aufbauen kann. Sie ist vielfach bei entsprechenden Arbeitsbedingungen entbehrlich.

Der Grundkörper 3 und der Spreizkörper 8 sind als im Tiefziehverfahren oder durch Bearbeitung gefertigte Formteile hergestellt. Wie insbesondere aus Fig. 6 ersichtlich, ist die Wandstärke des Grundkörpers 3 kleiner als die des Spreizkörpers 8 dimensioniert. Beide Wandstärken sind so bemessen, dass der Spreizkörper 8 im eingebauten Zustand weitgehend unverformt bleibt, während der Grundkörper 3 durch das Einwirken des Spreizkörpers 8 aufgespreizt wird.

Wie aus Fig. 6 ersichtlich ist, wird im Betrieb der Verschlussboden 5 des Grundkörpers 3 durch den herrschenden Innendruck und die damit entstehende axiale Kraft zumindest bei der ringförmigen Aussenkante 13 des Spreizkörpers 8 umgebogen. Zweckmässigerweise ist vor diesem Umbiegen die untere Stirnfläche 12 zu der Ringfläche 6 des Verschlussbodens 5 mit einem Abstand versehen. Die Breite der Ringfläche 6 kann so bemessen sein, dass der Verschlussboden 5 durch die Druckbeaufschlagung über diese Aussenkante 13 des Spreizkörpers 8 gebogen und radial expandierend verformt wird. Das Mass der Verformung entspricht der Differenz zwischen den Abständen t1 und t2. Somit ergibt sich eine zusätzliche Aufweitung des Grundkörpers und infolgedessen eine verstärkte Verankerung des Verschlusses im Bauteil.

Es könnte aber auch zusätzlich bzw. anstelle bei der Aussenkante 13 der unteren Stirnfläche 12 des Grundkörpers 8 ein Umbiegen an der Innenkante 13' erfolgen. Im Prinzip könnte die untere Stirnfläche 12 annähernd spitzig ausgebildet sein, so dass nur eine ringförmige Kante vorhanden wäre.

Um den Verschluss aus der Bohrung 1 herauszulösen, bedarf es dann eines wesentlich höheren Auspressdrucks als bei vergleichbaren herkömmlichen Verschlüssen. Der erfindungsgemässe Verschluss bewirkt dabei eine Selbstverstärkung der erforderlichen Auspresskraft. Voraussetzung dafür ist allerdings eine genügend grosse Anfangsverankerung.

Um das Aufspreizen des Grundkörpers 3 in der Bohrung 1 zu erleichtern, ist es im Rahmen der Erfindung möglich, in der zylindrischen Seitenwand des Grundkörpers längsverlaufende Aussparungen, Schlitze oder Fenster vorzusehen. Zwecks einer besseren Verankerung kann die Aussenwand des Grundkörpers mit einer reibungserhöhenden Beschichtung versehen werden.

Die Grund- und Spreizkörper werden vorzugsweise aus einem mit oder ohne Beschichtung versehenen Metall, wie beispielsweise aus rostfreiem Stahl oder Aluminium hergestellt. Sie können aber auch etwa aus Kunststoff, insbesondere glasfaserverstärktem Kunststoff gefertigt sein. Theoretisch könnten diese auch von einer hohlzylindrischen Querschnittsform abweichen, beispielsweise könnten diese annähernd quadratisch, rechteckig oder ähnlich geformt sein.

Der hutartig ausgebildete Spreizkörper 8 könnte auch an seinem zylindrischen Teil mit Längsschlitzen versehen sein, damit er sich in radialer Richtung etwas biegsamer verhalten würde.

Im Prinzip kann das Element auch als Halteelement ausgebildet sein und dabei diese auf den Verschlussboden 5 des Grundkörpers 3 wirkende axiale Kraft durch einen mit diesem verbundenen Achse oder dergleichen erfolgen, wie dies in Fig. 7 durch diese am Verschlussboden 5 befestigte und sich durch diese Entlüftungsbohrung 19 erstreckende Achse 21 strichliniert angedeutet ist. Diese Achse 21 ihrerseits kann dann mit einem daran befestigten Gegenstand verbunden sein. Zum Beispiel könnte die Bohrung in einer Decke angeordnet sein und die Achse nach unten vorstehen und daran eine Lampe oder dergleichen befestigt sein.

Der Verschlussboden des Grundkörpers könnte auch eben ausgebildet oder gegen die Innenseite des Bauteils gekrümmt sein.

## Patentansprüche

1. Element, vorzugsweise ein Verschlusselement zum dichten Verschliessen innendruckbeanspruchter Bohrungen von Motor- und Ventilblöcken, Chemiebehältern und ähnlichen Bauteilen, mit einem in die Bohrung im Wesentlichen spielfrei einsetzbaren Grundkörper (3) und einem in den Grundkörper eindrückbaren Spreizkörper (8), der im eingebauten Zustand radialen Druck auf die Innenwand des Grundkörpers (3) ausübt, **dadurch gekennzeichnet, dass**
der Grundkörper (3) mit einem Verschlussboden (5) versehen ist, wobei die Einbautiefen des Grundkörpers (3) und des Spreizkörpers (8) so aufeinander abgestimmt sind, dass im eingebauten Zustand durch eine auf den Verschlussboden (5) wirkende axiale Kraft in Zusammenwirkung mit dem Spreizkörper (3) die Seitenwand des Grundkörpers (3) annähernd radial gegen die Wand der zu verschliessenden Bohrung angedrückt wird, wobei der Spreizkörper (8) eine innenseitige Stirnfläche (12) mit einer Innenkante (13') und/oder Aussenkante (13) aufweist, wobei diese Stirnfläche (12) im eingebauten Zustand zum Verschlussboden (5) mit einem Abstand versehen ist oder auf diesem aufliegt, wobei der Verschlussboden (5) bei dieser Innenkante (13') und/oder Aussenkante (13) durch diese wirkende axiale Kraft gebogen wird, woraus sich eine räumlich definierte Aufspreizung des Grundkörpers (3) ergibt.

2. Element nach Anspruch 1,
**dadurch gekennzeichnet, dass**
der Verschlussboden (5) durch die axiale Kraft bei der bei der innenseitigen Stirnfläche (12) des Spreizkörpers (8) befindlichen Innenkante (13') und der Aussenkante (13) biegbar ist, wobei diese untere Stirnfläche (12) zum Verschlussboden (5) mit einem Abstand versehen ist.

3. Element nach Anspruch 2,
**dadurch gekennzeichnet, dass**
der Verschlussboden (5) des Grundkörpers (3) eine umfängliche radiale Ringfläche (6) und eine sich daran anschliessende leicht konische Kegelfläche (7) aufweist, wobei die Breite der Ringfläche (6) so bemessen ist, dass der Verschlussboden (5) durch den als axiale Kraft vorgesehenen Innendruck im Innenrandbereich der Ringfläche über die Innenkante (13') und/oder Aussenkante (13) des Spreizkörpers (8) sich radial aufweitend gebogen wird.

4. Element nach einem der Ansprüche 1 bis 3,
**dadurch gekennzeichnet, dass**
der hohlzylindrische Grundkörper (3) einen vorzugsweise nach innen gewölbten Verschlussboden (5) und der hutartige Spreizkörper (8) als vorzugsweise im Tiefziehverfahren gefertigte Blechteile hergestellt sind.

5. Element nach einem der Ansprüche 1 bis 4,
**dadurch gekennzeichnet, dass**
der Grundkörper (3) mit einem nach aussen abstehenden Stützflansch (4) versehen ist.

6. Element nach einem der Ansprüche 1 bis 5,
**dadurch gekennzeichnet, dass**
der Grundkörper (3) eingangsseitig mit einem zylindrischen Innenabsatz (11) zur leichten Einführung des Spreizkörpers (8) versehen ist.

7. Element nach einem der Ansprüche 1 bis 6,
**dadurch gekennzeichnet, dass**
die Aussen- und/oder die Innenfläche des Grundkörpers (3) mit Umlaufrillen versehen ist.

8. Element nach einem der Ansprüche 1 bis 7,
**dadurch gekennzeichnet, dass**
die Aussen- und/oder die Innenfläche des Grundkörpers (3) mit einer reibungserhöhenden Beschichtung versehen ist.

9. Element nach einem der Ansprüche 1 bis 8,
**dadurch gekennzeichnet, dass**
der Spreizkörper (8) eingangsseitig mit einem Aussenansatz (10) zur Aufweitung des Grundkörpers (3) versehen ist.

10. Element nach einem der Ansprüche 1 bis 9,
**dadurch gekennzeichnet, dass**
das Element als Halteelement ausgebildet ist und diese auf den Verschlussboden (5) des Grundkörpers (3) wirkende axiale Kraft durch einen mit diesem verbundenen Achse oder dergleichen erfolgt.

11. Element nach einem der Ansprüche 1 bis 10,
**dadurch gekennzeichnet, dass**
der Grundkörper (3) und/oder der Spreizkörper (8) aus einem mit oder ohne Beschichtung versehenen Metall, wie beispielsweise aus rostfreiem Stahl oder Aluminium hergestellt ist.

12. Element nach einem der Ansprüche 1 bis 10,
**dadurch gekennzeichnet, dass**
der Grundkörper (3) und/oder der Spreizkörper (8) aus Kunststoff, insbesondere einem glasfaserverstärktem Kunststoff gefertigt ist.

## Claims

1. An element, preferably a closing element for sealing holes of engine and valve blocks, chemical containers and similar components subjected to internal pressure, comprising a main body (3) that can be inserted into the hole substantially without play, and a spreading element (8) that can be pressed into the main body, said spreading element applying radial pressure to the inner wall of the main body (3) in the installed state,
**characterised in that**
the main body (3) is provided with a closing bottom (5), whereby the installation depths of the main body (3) and of the spreading element (8) being matched to one another such that in the installed state the side wall of the main body (3) is pressed approximately radially against the wall of the hole to be closed by an axial force acting on the closing bottom (5) in cooperation with the spreading element (3), whereby the spreading element (8) is provided with an inner sided inside face (12) with an inner edge (13') and/or an outer edge (13), whereby in the installed state this inside face (12) being provided a distance away from the closing bottom (5) or rest on it, whereby the closing bottom (5) at this inner edge (13') and/or outer edge (13) being bent by this acting axial force, from that a spatially defined spreading of the main body (3) is resulting.

2. The element according to Claim 1,
**characterised in that**
the closing bottom (5) can be bent by the axial force at the inner edge (13') and/or the outer edge (13) on the inner sided inside face (12) of the spreading element (8), whereby this lower inside face (12) being provided a distance away from the closing bottom (5).

3. The element according to Claim 2,
**characterised in that**
the closing bottom (5) of the main body (3) has a circumferential radial ring surface (6) and a slightly conical cone surface (7) connected to the latter, the width of the ring surface (6) being allocated such that the closing bottom (5) is bent, widening radially, by the internal pressure provided as the axial force in the inner edge region of the ring surface over the inner edge (13') and/or outer edge (13) of the spreading element (8).

4. The element according to any of Claims 1 to 3,
**characterised in that**
the hollow cylindrical main body (3) having a preferably inwardly curved closing bottom (5) and the hat-like spreading element (8) are produced as sheet metal parts preferably produced by the deep-drawing method.

5. The element according to any of Claims 1 to 4,
**characterised in that**
the main body (3) is provided with an outwardly projecting supporting flange (4).

6. The element according to any of Claims 1 to 5,
**characterised in that**
the main body (3) is provided on the input side with a cylindrical inner ledge (11) for easy introduction of the spreading element (8).

7. The element according to any of Claims 1 to 6,
**characterised in that**
the outer and/or the inner surface of the base element (3) is provided with circumferential grooves.

8. The element according to any of Claims 1 to 7,
**characterised in that**
the outer and/or the inner surface of the main body (3) is provided with a friction-increasing coating.

9. The element according to any of Claims 1 to 8,
**characterised in that**
the spreading element (8) is provided on the input side with an outer ledge (10) for widening the main body (3).

10. The element according to any of Claims 1 to 9,
**characterised in that**
the element is in the form of a holding element and this axial force acting on the closing bottom (5) of the main body (3) is brought about by an associated axis or the like.

11. The element according to any of Claims 1 to 10,
**characterised in that**
the main body (3) and/or the spreading element (8) are produced from a metal provided with or without a coating, for example stainless steel or aluminium.

12. The element according to any of Claims 1 to 10,
**characterised in that**
the main body (3) and/or the spreading element (8) are produced from plastic, in particular a glass fibre-reinforced plastic.

## Revendications

1. Elément, de préférence élément d'obturation, pour obturer de manière étanche des trous soumis à une pression intérieure de blocs moteurs et de bloc-valves, de récipients de chimie et d'équipements analogues, comprenant une pièce (3) de base, pouvant être insérée sensiblement sans jeu dans le trou, et une pièce (8) d'écartement, pouvant être enfoncée dans la pièce de base et appliquant, à l'état monté, une pression radiale sur la paroi intérieure de la pièce (3) de base, **caractérisé en ce que**
la pièce (3) de base est pourvue d'un fond (5) d'obturation, les profondeurs de montage de la pièce (3) de base et de la pièce (8) d'écartement étant adaptées l'une à l'autre, de manière à ce que, à l'état monté, la paroi latérale de la pièce (3) de base soit, par une force axiale agissant sur le fond (5) d'obturation en coopération avec la pièce (8) d'écartement, appliquée à peu près radialement sur la paroi du trou à obturer, la pièce (8) d'écartement comportant une surface (12) frontale du côté intérieur ayant un bord (13') intérieur et/ou un bord (13) extérieur, cette surface (12) frontale étant, à l'état monté, à distance du fond (5) d'obturation ou s'y appliquant, le fond (5) d'obturation étant courbé à ce bord (13') intérieur et/ou à ce bord (13) extérieur par cette force axiale appliquée en donnant un écartement défini spatialement de la pièce (3) de base.

2. Elément suivant la revendication 1,
**caractérisé en ce que**
le fond (5) d'obturation peut être courbé par la force axiale au bord (13') intérieur et au bord (13) extérieur se trouvant à la surface (12) frontale du côté intérieur de la pièce (8) d'écartement, cette surface (12) frontale inférieure étant à distance du fond (5) d'obturation.

3. Elément suivant la revendication 2,
**caractérisé en ce que**
le fond (5) d'obturation de la pièce (3) de base a une surface (6) annulaire radiale périphérique et une surface (7) légèrement conique s'y raccordant, la largeur de la surface (6) annulaire étant telle que le fond (5) d'obturation est, par la pression intérieure prévue comme force axiale dans la partie de bord intérieur de la surface annulaire, courbé en s'élargissant radialement sur le bord (13') intérieur et/ou le bord (13) extérieur de la pièce (8) d'écartement.

4. Elément suivant l'une des revendications 1 à 3,
**caractérisé en ce que**
la pièce (3) de base en forme de cylindre creux ayant un fond (5) d'obturation, de préférence voûté vers l'intérieur, et la pièce (8) d'écartement de type en chapeau sont fabriquées en pièces de tôle, fabriquées de préférence par le procédé d'emboutissage profond.

5. Elément suivant l'une des revendications 1 à 4,
**caractérisé en ce que**
la pièce (3) de base est pourvue d'une bride (4) d'appui en saillie vers l'extérieur.

6. Elément suivant l'une des revendications 1 à 5,
**caractérisé en ce que**
la pièce (3) de base est pourvue, du côté de l'entrée, d'un gradin (11) intérieur cylindrique pour faciliter l'introduction de la pièce (8) d'écartement.

7. Elément suivant l'une des revendications 1 à 6,
**caractérisé en ce que**
la surface extérieure et/ou la surface intérieure de la pièce (3) de base est pourvue de rainures périphériques.

8. Elément suivant l'une des revendications 1 à 7,
**caractérisé en ce que**
la surface extérieure et/ou la surface intérieure de la pièce (3) de base est pourvue d'un revêtement augmentant le frottement.

9. Elément suivant l'une des revendications 1 à 8,
**caractérisé en ce que**
la pièce (8) d'écartement est pourvue, du côté de l'entrée, d'une rallonge (10) extérieure pour élargir la pièce (3) de base.

10. Elément suivant l'une des revendications 1 à 9,
**caractérisé en ce que**
l'élément est constitué sous la forme d'un élément de maintien et la force axiale agissant sur le fond (5) d'obturation de la pièce (3) de base est produite par un axe ou analogue, qui lui est relié.

11. Elément suivant l'une des revendications 1 à 10,
**caractérisé en ce que**
la pièce (3) de base et/ou la pièce (8) d'écartement est en un métal muni d'un revêtement ou sans revêtement, comme par exemple en acier inoxydable ou en aluminium.

12. Elément suivant l'une des revendications 1 à 10,
**caractérisé en ce que**
la pièce (3) de base et/ou la pièce (8) d'écartement est en matière plastique, notamment en une matière plastique renforcée par de la fibre de verre.
